(19) Europäisches Patentamt / European Patent Office / Office européen des brevets

(11) **EP 1 818 378 A1**

(12) **DEMANDE DE BREVET EUROPEEN**

(43) Date de publication:
**15.08.2007 Bulletin 2007/33**

(51) Int Cl.:
*C09D 127/20* (2006.01)     *B05D 5/08* (2006.01)
*C23F 11/173* (2006.01)     *C23F 14/00* (2006.01)

(21) Numéro de dépôt: **07100844.5**

(22) Date de dépôt: **19.01.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **09.02.2006 FR 0601157**

(71) Demandeur: **Gallo, Michel**
**13500 Martigues (FR)**

(72) Inventeur: **Gallo, Michel**
**13500 Martigues (FR)**

(74) Mandataire: **Domange, Maxime**
**Cabinet Beau de Loménie**
**232, Avenue du Prado**
**13295 Marseille Cedex 08 (FR)**

(54) **Procédé de protection contre l'entartrage et la corrosion de surfaces métalliques et dispositif de traitement de l'eau**

(57)     La présente invention concerne un dispositif de traitement de l'eau (1) apte à être placé en amont d'une canalisation et/ou d'un appareillage comportant des surfaces métalliques ou non métalliques dont on veut éviter l'entartrage et la corrosion le cas échéant et dans lequel on fait circuler ladite eau, comprenant un corps métallique creux (2), de préférence tubulaire, dont la surface de la paroi interne est revêtue d'un film de fluoropolymère (3).

La présente invention concerne également un procédé de protection contre l'entartrage et la corrosion de canalisations et/ou appareillages présentant des surfaces métalliques ou non métalliques en contact avec de l'eau, caractérisé en ce que l'on dispose un dispositif selon l'invention, en amont d'une dite canalisation et/ou dit appareillage.

FIG.1

EP 1 818 378 A1

**Description**

La présente invention concerne des dispositif et procédé de traitement de l'eau et de protection de surfaces métalliques en contact avec ladite eau contre l'entartrage et la corrosion.

Le secteur technique de l'invention est le domaine de l'adoucissement de l'eau et de la prévention de l'entartrage et de la corrosion des canalisations et appareillages dans lesquels circule ou est stockée de l'eau, tels que des générateurs de chaleur, des unités de refroidissement, des échangeurs de chaleur, des filtres, des générateurs de production d'eau chaude à partir d'une alimentation d'eau froide et, notamment, des ballons de pré stockage et/ou production/stockage d'eau chaude.

Plus précisément, le domaine d'application principale de l'invention est celui des réseaux d'eau de toute nature, des générateurs d'eau chaude à pression atmosphérique ou surpressée, des canalisations et circuits de distribution d'eau chaude sanitaire, des échangeurs thermiques de tout type utilisés dans des chaufferies collectives ou dans l'industrie et dont les applications sont en mode chauffage ou refroidissement.

On connaît des dispositifs ou installations de traitement de l'eau et de protection contre la corrosion par l'eau de surfaces métalliques par un effet galvanique, lesdits dispositifs comprenant un corps métallique, notamment un corps tubulaire, constituant une enveloppe métallique, dans lequel on a disposé une anode consommable ou sacrificielle, reliée par contact direct ou indirect à ladite enveloppe, le métal de l'enveloppe créant une différence de potentiel électrochimique avec celui de l'anode, de sorte que les ions métalliques se libèrent de l'anode qui se dissout progressivement dans l'eau en circulation dans ledit dispositif.

En général, l'anode est en zinc et l'enveloppe métallique en laiton, compte tenu du fait que celle-ci doit constituer une enveloppe suffisamment résistante. La libération de ces ions métalliques de zinc suscite la formation d'une couche de protection contre la corrosion à l'intérieur des canalisations d'eau en aval du dispositif. L'effet protecteur serait dû à ce que les ions de zinc se complexent à des substances de type calcaire présentes dans l'eau, voire agissent comme initiateurs dans le processus de précipitation de substances productrices de dépôt de calcaire et s'adsorbent sur les parois de la canalisation en aval du dispositif.

Dans EP 0680457, on a proposé de coupler, à l'intérieur dudit corps creux, des anodes sacrificielles en zinc à des éléments en forme de canaux multiples allongés en matériaux diélectriques, ceci afin de réduire davantage l'entartrage des canalisations en aval, en particulier, des canalisations et générateurs d'eau chaude pour des eaux très dures.

Le principe physique de ces dispositifs de traitement physique est d'induire des effets micro électrolytiques de l'eau par passage dans des canaux de zinc et des effets électrostatiques dans l'eau, par passage dans des canaux de polymères diélectriques, lesdits effets empêchant la précipitation des carbonates de calcium et de magnésium en calcite et/ou des sulfates en gypse, lesquels calcite et gypse obstruent, à la longue, et sans ce traitement, les canalisations et les générateurs ou ballon de production ou de stockage d'eau chaude.

Ces dispositifs de traitement physique décrits dans EP 0680457 induisent la conversion des germes ioniques de carbonates de calcium et de magnésium sous forme cristalline non définie facilement éliminable, empêchant ainsi les ions sulfates et carbonates de calcium et de magnésium de précipiter, respectivement, en gypse et en calcite dure et incrustant.

Ces dispositifs de traitement physique décrits dans EP 0680457 ne nécessitent pas d'alimentation électrique, magnétique ou autre. Ils sont constitués d'une succession de canaux de zinc pur faisant fonction d'anodes et de canaux de polymères alimentaires à propriétés diélectriques, générateurs d'électricité statique, insérés dans un corps en laiton. Lorsque l'eau circule au travers desdits canaux, une différence de potentiel de -1 volt est créée. C'est la réaction entre les particules ionisées présentes dans l'eau (ions $Ca^{2+}$ et ions $Mg^{2+}$) et les canaux de zinc couplés aux canaux de polymère diélectrique présents dans ces dispositifs qui engendre une microélectrolyse de l'eau et des effets électrostatiques avec modification de la structure cristalline des germes ioniques.

Dans les installations connues à ce jour, on place ces dispositifs de traitement physique de l'eau, cités ci-dessus, sur l'eau froide d'alimentation et un autre sur le retour de boucle de l'eau chaude lorsqu'il existe.

Dans EP 0680457, il faut noter que les anodes sacrificielles en zinc sont également composées de barillets comprenant de multiples canaux allongés, en contact métal-métal avec l'intérieur des tubes en laiton supportant le dispositif, ce qui conduit à l'effet galvanique recherché.

Selon l'enseignement de EP 0680457, la division de la cavité tubulaire du dispositif en une multiplicité de canaux allongés, a pour effet d'augmenter la surface desdits matériaux diélectriques en contact avec l'eau, et aussi d'augmenter la pression de l'eau en circulation dans le dispositif afin de donner lieu à la formation de petite bulles en sortie des canaux, lesquels sont sensés servir de sites de précipitation de colloïdes.

Le dispositif décrit dans EP 0680457 conduit effectivement à favoriser la conversion d'une certaine partie de calcite dure en aragonite molle. Toutefois, en mettant en oeuvre le dispositif décrit dans EP 0680457, l'inventeur de la présente invention s'est aperçu que le taux de transformation du calcaire, type calcite, en cristaux mous d'aragonite, est variable suivant la qualité de l'eau et les régimes d'écoulement de ladite eau et, en général, toujours limité à environ 60%.

C'est pourquoi, dans WO 00/61500, on a cherché à augmenter le taux de conversion de calcite en aragonite au-dessus de 95% et ce, même en présence d'eau très riche en carbonates de calcium et magnésium et riche en sulfates de calcium et magnésium, en mettant en oeuvre certaines dispositions particulières dans l'installation et le procédé de fonctionnement de l'installation destinée à être protégée. Plus particulièrement, on place un dispositif supplémentaire dans une boucle existante entre la sortie du générateur d'eau chaude et l'entrée d'eau froide, très dure, dans ledit générateur, et en renouvelant, au moins deux fois par heure, le volume du ballon de stockage d'eau chaude, cela pendant au moins 8 heures par jour si ce n'est, de préférence, en continu.

Toutefois, le dispositif décrit dans EP 0680457 présente également d'autres inconvénients. Ainsi l'inventeur a observé qu'il n'y avait pas de parfaite étanchéité entre la paroi en laiton de la cavité principale et les barillets en zinc ou en matériau diélectrique, tel que le PTFE, formant lesdits canaux multiples allongés, ce qui favorise le passage de l'eau entre le laiton et lesdits barillets en zinc ou en plastique. Il résulte de ce contact du laiton avec l'eau, une électrolyse interne de la paroi en laiton du dispositif et la dissolution d'ions cuivre dans l'eau. La libération d'ions cuivre du laiton, dans l'eau, rend le dispositif impropre à l'utilisation dans le temps pour des eaux potables. En outre, il est connu que les ions cuivre engendrent des problèmes de corrosion dans les canalisations en acier situées en aval (corrosion galvanique et corrosion sous dépôt).

De surcroît, lorsque les barillets en zinc servant d'anode sacrificielle, sont consommés, ce qui peut se produire assez rapidement suivant l'agressivité de l'eau, l'eau vient en contact direct avec la paroi interne du tube en laiton, accroissant encore les problèmes de corrosion interne dudit tube et de corrosion en aval dans les canalisations métalliques, tels que mentionnés ci-dessus. Ceci a été observé dans des installations d'eau froide et d'eau chaude où le dispositif était mis en oeuvre, et où les caractéristiques de l'eau étaient à la fois agressives et entartrantes ou seulement agressives vis à vis des métaux.

Il faut d'ailleurs noter que, dans EP 0680457, aucune caractéristique d'eau n'est renseignée pour savoir dans quelles conditions de qualité d'eau, de dureté, de teneur en chlorures, sulfates et autres composés, les essais ont été réalisés.

Un autre inconvénient du dispositif décrit dans EP 0680457 est qu'il engendre des problèmes de corrosion en aval lorsque l'eau contient des ions chlorures, lesquels accélèrent la solubilisation des anodes en zinc, provoquant une corrosion interne dudit dispositif par contact de l'eau avec la paroi interne du dispositif.

Dans WO 2004/108607, il est décrit un dispositif dont le principe repose sur l'électro-galvanisation, comprenant un corps en laiton dans lequel se trouve une anode en zinc perforée en contact électrique étroit avec l'enveloppe métallique intérieure afin de créer une différence de potentiel électrique et la libération continue d'ions métalliques à partir de l'anode consommable. Il est rajouté, à l'intérieur de l'enveloppe et en amont et en aval de l'anode consommable, des agitateurs métalliques en acier perforés afin de produire un tourbillon dans l'eau et afin de faciliter le nettoyage de la surface de l'anode pour en accroître l'efficacité selon l'inventeur, les agitateurs métalliques pouvant être déclinés sous différentes formes.

Le problème majeur dans ce dernier dispositif est que -comme dans le précédent dispositif- les parois en laiton se corrodent et les ions cuivre libérés dans le flux d'eau engendrent des problèmes de corrosion également dans les canalisations métalliques situées en aval des dispositifs.

En outre, dans ces dispositifs, on observe des problèmes d'entartrage dans les dispositifs eux-mêmes, notamment dans l'espace interstitiel dans lequel l'eau peut s'infiltrer entre la surface externe des barillets formant lesdits canaux multiples allongés et la paroi interne du réacteur tubulaire, notamment suite à la corrosion de ladite paroi interne en laiton ou acier et la dissolution desdits éléments formant anodes comme explicité ci-après, et une prévention insuffisante de l'entartrage des appareils et conduites métalliques en aval que l'on cherche à protéger.

En particulier, il a été observé selon la présente invention qu'en utilisant de l'eau de forage de très grande dureté et avec de fortes teneurs en chlorure, donc réputée très difficile à traiter, et plus précisément présentant une dureté de 42 degrés français de dureté (TH), et une teneur en chlorure de 55 mg/l et en sulfates de 120 mg/l, conduisant à une conductivité de l'eau de 820 $\mu$S/cm, il est pratiquement impossible d'éviter l'entartrage et la corrosion à l'intérieur des dispositifs et dans les appareils et canalisations situés en aval, à l'aide des dispositifs décrits dans EP 0680457 et WO 2004/108607.

Parallèlement, certains auteurs (ROQUES et coll. La Tribune de l'eau, janvier-février 1994, volume 47, n°567) ont établi que le processus de cristallogénèse, conduisant à la formation du tartre dans les canalisations et appareillages en contact avec de l'eau, est un processus de formation hétérogène, et ils ont constaté que certains matériaux constitutifs desdites surfaces en contact avec l'eau, pouvaient présenter des propriétés nucléogènes favorisant ladite germination cristalline.

Le but de la présente invention est donc de fournir des dispositif et procédé de traitement d'eau de protection contre l'entartrage et la corrosion, améliorés, en termes de protection contre l'entartrage et la corrosion en aval du dispositif dans des appareils et canalisations à surfaces métalliques en contact avec ladite eau, aussi bien que dans les dispositifs de traitement de l'eau eux-mêmes.

Le but de la présente invention est en particulier de fournir des dispositifs et procédés de traitement d'eau qui soient efficaces pour des eaux de qualité variable, c'est-à-dire aussi bien des eaux douces, donc très agressives vis à vis des métaux, que des eaux dures, voire très dures, c'est-à-dire avec des teneurs en carbonates de calcium et de magnésium très élevées, et résistants également aux eaux contenant des ions chlorures et sulfates, connues pour contribuer à la corrosion des dispositifs eux-mêmes et des canalisations métalliques véhiculant de l'eau chaude. , de l'eau froide, des générateurs de chaleur (ballons, échangeurs) et des refroidisseurs de tous types. L'invention vise à fournir, plus particulièrement, un réacteur dont chaque composant interne a des propriétés et des fonctions complémentaires pour maîtriser la croissance du calcaire et de la corrosion à l'intérieur dudit réacteur et également dans tous les circuits et appareils situés en aval.

Selon la présente invention, l'inventeur s'est aperçu, au cours de ses travaux rapportés ci-après, que la libération d'ions cuivre provenant de l'intérieur des dispositifs en laiton ou en cuivre, était un facteur important dans le déclenchement de la corrosion en utilisant de l'eau chaude, mais également dans les circuits d'eau froide. Couplé à la présence d'ions chlorure dans l'eau et à l'accroissement de la température en aval, le processus de corrosion par crevasses et sous dépôt devient dominant après quelques mois d'exploitation. Le laiton que l'on trouve à l'intérieur de la plupart des dispositifs précités, se corrode très rapidement dès que l'eau à traiter est soit très douce (dite agressive vis-à-vis des métaux), soit très calcaire avec des ions chlorure, ce qui se produit dans différents endroits où l'eau est distribuée ou produite par forage.

La présente invention fournit un dispositif de traitement de l'eau, apte à être placé en amont d'une canalisation et/ou d'un appareillage comportant des surfaces métalliques ou non métalliques, dont on veut éviter l'entartrage et la corrosion, le cas échéant, et dans lequel on fait circuler ladite eau, comprenant un corps métallique creux, de préférence tubulaire, dont la surface de la paroi interne est revêtue d'un film de fluoropolymère.

La surface interne du tube/réacteur ainsi revêtu génère un effet nucléogène significatif tout en étant résistant à la corrosion.

L'inventeur a en effet observé que ce type de revêtement fluoropolymère, par ailleurs connu pour conférer un caractère non corrodable en présence d'eau, mais aussi dans le domaine alimentaire pour ses propriétés anti-adhérentes vis-à-vis des matières organiques sur les surfaces métalliques, tels que les ustensiles de cuisine, était particulièrement avantageux dans le cadre de la protection contre l'entartrage et la corrosion de surfaces métalliques, dans un dispositif de traitement de l'eau selon l'invention, de par ses propriétés nucléogènes.

Ce fluoropolymère présente, en effet, des propriétés avantageuses nucléogènes, notamment en présence d'une eau de dureté variable de 2° français de dureté (TH) à plus de 60° français de dureté (TH).

Dans la présente demande, on entend par "non corrodable" et "résistant à la corrosion", que l'on n'observe aucun point de corrosion par contact de la surface ou du matériau concerné avec une eau réputée difficile à la température d'au moins 50°C et une teneur en ions chlorure d'au moins 50 mg/l.

De préférence, ledit film de fluoropolymère présente une épaisseur de 5 à 500 µm, de préférence 10 à 100 µm, notamment de 10 à 60 µm. Ce type de film peut être appliqué sur des surfaces métalliques par des procédés de pulvérisation à température ambiante à partir de solutions dudit fluoropolymère. Puis, lesdites surfaces métalliques sont chauffées dans des fours à température supérieure à 300°C afin que le film de fluoropolymère adhère parfaitement aux dites surfaces.

On entend ici par "fluoropolymère", des polymères organiques comprenant des monomères avec des substituants fluorés, tels que les polymères suivants : PTFE (polytétrafluoroéthylène), FEP (fluoroéthylènepropylène), PFA (perfluoroalkoxy).

De préférence, ledit fluoropolymère est un polymère de qualité alimentaire et plus particulièrement du PTFE ou du FEP ou un mélange des deux.

Avantageusement, un dispositif selon l'invention comporte en outre des éléments métalliques formant anodes sacrificielles, placés à l'intérieur dudit corps creux, de préférence tubulaire, lesdits éléments formant anodes sacrificielles n'étant pas en contact avec ladite surface de la paroi interne revêtue d'un dit film de fluoropolymère.

De préférence, le ou lesdits éléments formant anodes sont constitués d'un premier métal, de préférence du zinc, et sont en contact et supportés de manière amovible par une tige métallique centrale d'un deuxième métal présentant un potentiel électrochimique supérieur à celui du premier métal, c'est-à-dire formant cathode, de préférence un dit deuxième métal résistant à la corrosion, tel que du titane ou un alliage à base de nickel comme l'inconel.

On comprend que le couple des métaux desdites anode et cathode doit former un potentiel électrochimique d'au moins -1 volt, générant la dissolution dudit métal, de préférence le zinc formant l'anode en contact avec l'eau.

On comprend donc que ladite tige axiale en dit deuxième métal, notamment en titane, a une double fonction de support mécanique mais aussi d'effet électrogalvanique par le fait qu'elle est en contact métal/métal avec les disques dudit premier métal formant anode.

Avantageusement encore, un dispositif de traitement de l'eau selon l'invention comporte, à l'intérieur dudit corps creux, des éléments formant des surfaces de matériau nucléogène, de préférence résistant à la corrosion comme des fluoropolymères tels que le PTFE, le FEP ou un mélange des deux, contre lesquelles surfaces l'eau en circulation dans ledit corps creux vient buter.

L'inventeur a donc formé l'hypothèse et observé par ses travaux que l'effet avantageux, décrit dans EP 0680457, des matériaux diélectriques, en fait le PTFE, était vraisemblablement lié à leur propriété nucléogène et qu'il était plus pertinent de former des surfaces de matériau nucléogène, contre lesquelles l'eau, circulant dans le dispositif de traitement de l'eau, vient buter, ceci afin de maximiser l'effet de contact avec lesdites surfaces, plutôt que de chercher à augmenter la pression de l'eau et/ou former des petites bulles de gaz en divisant le fluide à travers une multiplicité de canaux allongés formés dans lesdits matériaux.

Avantageusement, ledit corps creux tubulaire est formé de deux sections de corps creux tubulaires, définissant deux demi corps creux, dont les extrémités peuvent être vissées l'une à l'autre, de sorte que ladite tige centrale peut être retirée et remplacée, notamment lorsque les éléments formant anodes sont consommés.

Dans un mode préféré de réalisation, ledit corps creux tubulaire renferme au moins une tige métallique axiale supportant de manière amovible desdits éléments formant anodes, ainsi que desdits éléments en matériau nucléogène, lesdits éléments étant configurés de telle sorte que l'eau s'écoulant à travers ledit corps tubulaire vient buter contre des surfaces desdits éléments s'étendant dans une direction non parallèle à la direction longitudinale axiale dudit corps creux et de la tige.

Selon une variante avantageuse de réalisation de l'invention, le dispositif est caractérisé en ce que :

- lesdits éléments formant anodes et/ou lesdits éléments formant des surfaces de matériau nucléogène, sont constitués par des disques perforés, insérés à l'intérieur d'un dit corps creux de forme tubulaire,

- lesdits disques étant supportés de manière amovible par au moins une tige longitudinale, sur la ou sur lesquelles ils sont enfilés de manière espacée,

- lesdites perforations de préférence circulaires d'un disque donné étant décalées en rotation par rapport à celles d'un disque suivant au moins pour certains des disques, de sorte que l'eau ne puisse pas s'écouler à travers ledit corps creux, dans une direction longitudinale XX', sans venir buter contre certaines au moins des surfaces pleines desdits disques perpendiculaires à ladite direction longitudinale XX', et

- lesdits disques présentent un diamètre inférieur au diamètre interne dudit corps creux tubulaire, de manière à permettre un écoulement d'eau entre la périphérie desdits disques et ladite surface interne dudit corps creux tubulaire.

On entend ici par "disques" que la plus grande dimension desdits éléments est le diamètre, c'est-à-dire une direction s'étendant dans la direction perpendiculaire à la direction longitudinale. En fait, l'épaisseur du disque, c'est-à-dire la direction s'étendant dans ladite direction longitudinale, est essentiellement dictée par des considérations d'ordre mécanique. Les surfaces fonctionnelles des disques, au sens de la présente invention, c'est-à-dire ayant un effet galvanique ou nucléogène, sont les surfaces circulaires perforées s'étendant dans la direction perpendiculaire à ladite direction longitudinale XX'.

La proportion relative des surfaces perforées et surfaces pleines desdits disques est un compromis entre la nécessité de permettre l'écoulement de l'eau à travers le disque tout en préservant une résistance mécanique suffisante au disque. En pratique, les surfaces perforées représentent de 20 à 75% de la surface totale d'une face des disques, de préférence 25 à 55%.

Plus particulièrement encore, lesdits éléments formant anodes et lesdits éléments de matériau nucléogène sont disposés en alternance sur ladite tige métallique axiale.

Avantageusement encore, le dispositif selon l'invention comprend desdits disques en matériau nucléogène, de préférence résistant à la corrosion, de préférence encore en fluoropolymère tels que le PTFE, le FEP ou un mélange des deux, présentant des perforations semi circulaires formant des échancrures en périphérie des disques.

Cette configuration permet de faciliter l'écoulement de l'eau entre le disque concerné et la surface interne dudit corps creux.

Les échancrures semi circulaires sont essentiellement avantageuses pour les disques en matériaux nucléogènes non corrodables, en l'espèce les disques en fluoropolymère, pour augmenter la surface de contact entre l'eau s'écoulant dans l'espace entre les disques et la surface interne du réacteur, ce qui permet a la fois de maximiser l'effet nucléogène et de diminuer les pertes de charge dans le réacteur.

Le nombre de disques, l'épaisseur des disques et l'espace entre les disques doivent répondre a un compromis entre la nécessite d'obtenir des surfaces nucléogènes, et surfaces d'anodes sacrificielles suffisamment importantes, d'une part, et que, d'autre part, l'eau puisse s'écouler entre les disques dans des mouvements multidirectionnels et, ce, sans créer trop de perte de charge dans le réacteur (inférieure à 0,30 bar).

Un bon compromis est obtenu avec des épaisseurs e allant de D/30 à D/5, de préférence D/20 à D/10, D étant le diamètre des disques, et une distance d entre deux disques consécutifs, dans la direction longitudinale XX', telle que d=e/2 à 3e.

D'autre part, D est de préférence tel que D1 - D = 1 à 5% de D1, D1 étant le diamètre interne dudit corps creux. Cette configuration permet de faciliter l'écoulement de l'eau entre le disque concerné et la surface interne dudit corps creux.

De préférence, ladite tige axiale centrale comporte, à chacune de ses extrémités, un disque perforé du même dit deuxième métal, notamment en titane.

La présente invention a donc également pour objet un procédé de protection contre l'entartrage et la corrosion de canalisations et/ou appareillages présentant des surfaces métalliques ou non métalliques en contact avec de l'eau, caractérisé en ce que l'on dispose un dispositif selon l'invention, en amont d'une dite canalisation et/ou dit appareillage.

La présente invention fournit également un appareillage de production ou stockage d'eau chaude ou génération de chaleur, tel qu'un ballon d'eau chaude ou un échangeur à plaques, caractérisé en ce qu'il comprend en amont un dispositif de traitement de l'eau selon l'invention.

Plus particulièrement, ledit appareillage comprend des surfaces métalliques destinées à être en contact avec de l'eau circulant ou stockée dans ledit appareil, lesdites surfaces métalliques étant protégées par un revêtement d'un dit film de fluoropolymère de 10 à 100 μm, de préférence 10 à 60 μm.

Plus particulièrement encore, la présente invention fournit un échangeur de chaleur à plaques dont les plaques métalliques sont revêtues d'un dit film de fluoropolymère. Ces épaisseurs de film de fluoropolymère n'affectent pas les propriétés de transfert thermique dudit échangeur.

D'autres caractéristiques et avantages de la présente invention ressortiront mieux à la lecture de la description qui va suivre, faite de manière illustrative et non limitative, en référence aux dessins annexés sur lesquels :

la figure 1 représente une vue en coupe d'un dispositif de traitement d'eau selon l'invention, comportant une alternance de disques en PTFE et disques de zinc, avec des disques en titane aux extrémités,

la figure 2 représente les différents types d'éléments constitutifs d'un dispositif selon la figure 1,

les figures 3 et 4 représentent des vues en perspective des disques en zinc (figure 3) et de PTFE (figure 4), et

De manière à anticiper les problèmes d'entartrage et de corrosion qui se manifestent, après plusieurs mois, en utilisant tous les dispositifs précités de EP 0680457 et WO 2004/108607, une série de tests a été réalisée dans des conditions extrêmes, volontairement très contraignantes, à savoir :

- à température de 100°C, donc avec ébullition de l'eau pendant 2 heures environ,

- une eau très calcaire : 42° français de dureté TH, équivalente à 420 mg/l de carbonate de calcium,

- une teneur en ions chlorures élevée : 55 mg/litre,

- une teneur en ions sulfates élevée : 120 mg/litre.

Dans ces tests, on a expérimenté différents matériaux et revêtements spéciaux d'un dispositif de traitement de l'eau, et étudié le comportement desdits matériaux notamment l'état de surface, l'état d'entartrage, les points d'amorçage de corrosion, la structure du calcaire formé, la quantité, son pouvoir d'accrochage dans de telles conditions.

Un volume d'eau de 1,5 litre d'eau froide à 20°C ayant les caractéristiques ci-dessus était porté à 100°C de température dans différents béchers dont les parois internes étaient constituées ou revêtues de matériaux de natures différentes, jusqu'à obtenir un volume résiduel de 100 ml (0,1 litre), soit équivalent à un taux de concentration de 15 fois, ce qui représente des conditions extrêmement difficiles pour les matériaux testés, tels que des béchers en :

a- acier inox 316L (NF Z3CND 17-13-03) (soit 17% Ni - 13% Cr - 3% Mo),

b1- acier inox revêtu d'une couche inférieure à 100 microns de PTFE,

b2- acier inox revêtu d'une couche inférieure à 100 microns de FEP,

c- cuivre,

d- titane,

e- zinc pur.

Dans une deuxième série d'expériences réalisées avec des béchers métalliques (b1 et b2) dont tout l'intérieur est revêtu d'une couche de fluoropolymère, on a introduit différents disques de matériaux tels que cuivre, zinc, titane, polytétrafluoroéthylène (PTFE), laiton (alliage cuivre + zinc 60/40), magnésium, acier inoxydable 316L de très haute finition de surface, alliage Inconel 600 (72 % de nickel, 15 % de chrome, 13 % de fer).

Après évaporation de l'eau comme ci-dessus, le volume résiduel est soigneusement récupéré, avec le calcaire formé, dans un flacon en verre de 100 ml. Ce concentrat est analysé par granulométrie avec un granulomètre laser du type Master Sizer 2000 (de MALVERN Intruments).

Ainsi, on a pu comparer la quantité de tartre (calcaire) produit, la taille des particules de tartre, la concentration en carbonates de calcium à l'état dissous et celle de chlorures et de sulfates.

La teneur en chlorures dans ledit concentrat a été mesurée à 800 mg/l, ce qui correspond à un taux de

concentration de $\dfrac{800}{55} = 14,5$.

La teneur en sulfates dans ledit contrat a été mesurée à 1700 mg/l, ce qui correspond au un taux de

concentration de $\dfrac{1700}{120} = 14,1$.

Ces taux de concentration en chlorures et en sulfates sont en cohérence avec le taux de concentration par évaporation, à savoir d'environ 15.

La dureté de l'eau mesurée dans le concentrat atteint 220 degrés français de dureté (TH), ce qui correspond à un ratio de concentration de $\frac{220}{42} = 5,2,$ ce qui est normal puisqu'une partie du calcaire s'est déposée sur les parois, au fond et sur les disques des différents matériaux testés.

En fait, cela signifie qu'il y a une partie du calcaire soluble dans l'eau et une autre partie qui précipite sous forme d'aragonite molle. En effet, on a observé que le calcaire formé avec un bécher comprenant un revêtement de très faible épaisseur en fluoropolymères, présente un aspect pseudo-fluide (mou) surtout à ce degré de concentration dans l'eau (220° français de TH), et qu'il n'adhère pas aux parois en verre du flacon, ni aux parois des béchers métalliques revêtues par un film de fluoropolymères lors de la récupération. Le calcaire ainsi formé (100% d'aragonite molle) s'agglomère très facilement dans le concentrat sursaturé.

En revanche, avec les béchers en inox, zinc et cuivre, on observe la formation de calcaire dur qui adhère aux parois, et de micro grains de calcaire dur et mou au fond, et les taux de sursaturation maxima (β, le taux de sursaturation étant le taux de carbonate de calcium dissout avant la précipitation du carbonate de calcium) sont obtenus avec une paroi revêtue de fluoropolymères. Ceci permet, d'une part, de réduire la quantité de calcaire qui précipite et, d'autre part, d'augmenter la teneur en calcaire mou (aragonite) d'une valeur quasiment de 100% et non pas d'augmenter la taille des particules, comme décrit dans les brevets antérieurs, notamment dans EP 0680457.

En dépit de la concentration en chlorures atteinte après la concentration par ébullition, soit 800 mg/l, les parois du bécher revêtues de film fluoropolymères n'ont présenté aucune anomalie de corrosion, de même que le titane, ce qui n'est pas le cas pour le cuivre, le laiton, le magnésium, le zinc et l'acier inoxydable 316L qui présentaient tous des points de corrosion.

Dans la deuxième série d'expériences, certains des matériaux des disques mis dans les différents béchers ont été insensibles à la corrosion et leur surface est restée intacte d'entartrage à savoir le titane et l'inconel 600. Pour les disques en PTFE, on a noté un film visqueux d'eau et de carbonate de calcium mou (aragonite) à leur surface. Ce dépôt visqueux s'élimine toutefois facilement par un jet d'eau. Il a été obtenu dans un bécher, c'est-à-dire dans des conditions statiques, mais s'élimine progressivement dans des conditions hydrodynamiques avec écoulement d'eau contre ou parallèlement à la surface de PTFE. Enfin, pour les disques en acier inoxydables, cuivre et laiton, des points de corrosion étaient notables.

Pour les matériaux tels que le zinc ou le magnésium, à potentiel électronégatif, ceux-ci sont connus pour réagir comme anode sacrificielle dans les eaux agressives et corrosives.

Dans les conditions drastiques dans lesquelles tous les essais ont été réalisés pour anticiper les effets néfastes à moyen et long terme, l'effet nucléogène dû à la surface développée et mouillée du revêtement à base de fluoropolymères a été incroyablement surmultiplié puisqu'il a permis de produire un peu de calcaire avec une structure pseudo-fluide (molle) et, de plus, a permis d'augmenter le taux de sursaturation (β maximal), c'est-à-dire la quantité de calcaire à l'état dissout à des valeurs jamais atteintes à ce jour (220°français de dureté (TH) en solution dans le concentrat),.

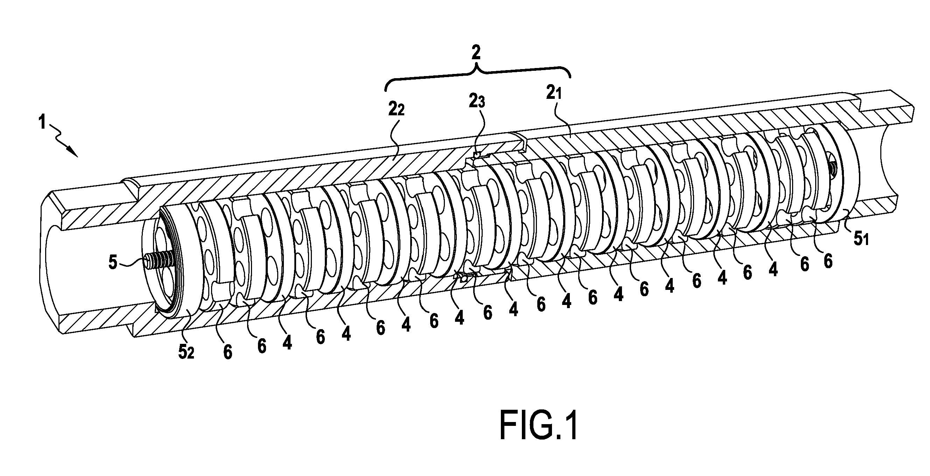

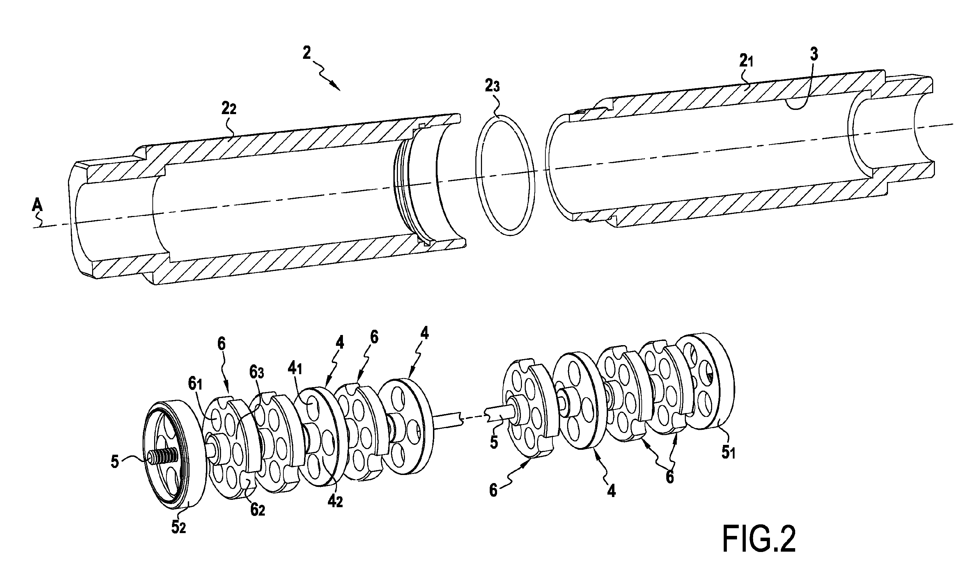

A partir de ces résultats, l'inventeur a réalisé un réacteur de traitement de l'eau, tel que représenté sur les figures 1 et 2, formé par un tube métallique 2 taraudé aux deux extrémités dont l'intérieur est totalement revêtu par un film 3 (fig. 2) d'environ 100 μ, de fluoropolymère 3 appliqué à froid et passé au four à une température comprise entre 300°C et 400°C dans des conditions que celui-ci résiste à l'abrasion, aux ions chlorures, aux eaux agressives et corrosives, ce qui n'est pas le cas avec tous les dispositifs cités dans l'art antérieur.

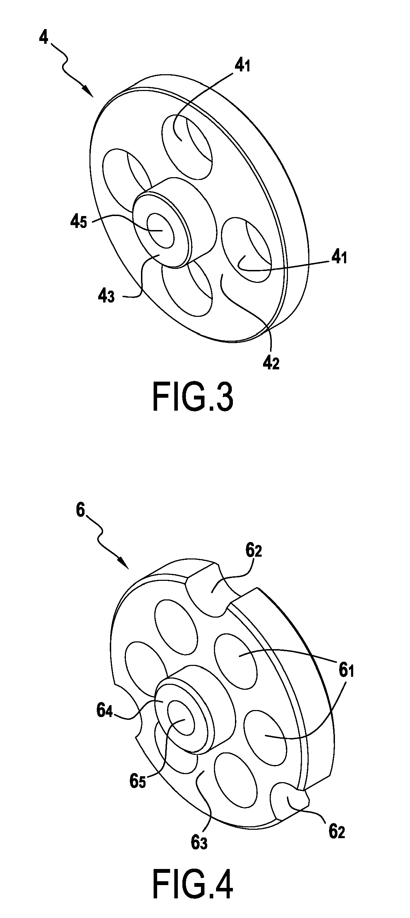

De manière à ce que l'eau, traversant ce tube 2 (fig. 2) ainsi protégé, puisse se déplacer dans de multiples directions et multiplier le contact avec des surfaces nucléogènes développées par le film de fluoropolymère et résistantes à la corrosion, on a introduit des disques perforés 6 de différents matériaux nucléogènes et résistants à la corrosion, et d'autres 4 servant d'anode sacrificielle bien connus comme le zinc. Ainsi, l'empilement des disques perforés espacés par des entretoises $4_3$, $6_4$ (fig. 3 et 4) en forme de bagues usinées sur chaque disque, sur une tige en titane 5 permet un écoulement multidirectionnel du flux d'eau et une surface mouillée multipliée pour déclencher le processus de nucléogénèse et le déplacement du taux de sursaturation du calcaire dans l'eau.

Les disques en PTFE et en zinc ne sont pas en contact avec la paroi interne, comme c'est le cas dans EP 0680457, puisque l'eau est aussi capable d'emprunter un espace annulaire entre la paroi interne du tube/réacteur et l'extrémité périphérique circulaire de tous les disques.

Selon la présente invention, le phénomène galvanique n'est pas recherché dans tous les cas, comme dans les dispositifs de l'art antérieur où les électrodes constituées de barillets à canaux allongés de zinc sont en étroit contact avec la paroi métallique en laiton, ou en acier provoquant corrosion et entartrage à l'intérieur des dispositifs au niveau de la surface interne du tube du réacteur en laiton ou en acier, car de l'eau peut s'écouler entre les barillets et le tube du réacteur dans lesquels il sont insérés, et ce , d'autant plus, que les barillets en zinc se dissolvent au contact de l'eau, augmentant le contact de l'eau avec la surface interne dudit tube non protégé.

Sur les figures 1 et 2, on a représenté un réacteur de traitement de l'eau selon l'invention, comprenant deux tubes mâle $2_1$ et femelle $2_2$, taraudés aux extrémi-

tés et aptes à être vissés l'un dans l'autre, avec un joint torique 2-3 entre les deux, de manière à former un réacteur selon l'invention. La surface interne cylindrique desdits tubes a été revêtue d'un film d'environ 50 μm de PTFE 3 dans les conditions mentionnées ci-dessus. Des disques perforés 4, 6 de différents matériaux ont été enfilés sur une tige axiale en titane 5.

Pour permettre un espacement déterminé d entre les différents disques, les disques comprennent des perforations centrales $4_5$, $6_5$, à travers lesquelles ils sont enfilés dans la tige axiale support en titane 5, et comprennent, sur au moins une de leurs faces, des bagues tubulaires $4_3$, $6_4$, autour desdites perforations centrales $4_5$, $6_5$, formant entretoise ou écarteur entre les différents disques, lorsque ceux-ci sont empilés.

Les disques 4 et 6 comprennent des perforations circulaires $6_1$, destinées à permettre l'écoulement de l'eau dans la direction longitudinale, lorsque l'eau s'écoule à travers ledit réacteur. Toutefois, les perforations circulaires $4_1$, $6_1$ des différents disques sont décalées en rotation, de manière aléatoire, de manière à créer le maximum de mouvements multidirectionnels de l'eau et notamment de manière à ce que l'eau, en écoulement à travers ledit réacteur, vienne buter contre les surfaces pleines $6_3$, $4_2$ des différents disques et maximiser les contacts de l'eau avec ces surfaces, ce qui se produit lorsque l'eau en écoulement dans la direction longitudinale à travers ledit tube 2 rencontre plusieurs fois de telles surfaces pleines $4_2$, $6_3$ de différents disques.

De manière à permettre un écoulement d'eau dans l'espace annulaire entre les disques 4, 6 et la surface interne revêtue de fluoropolymère 3 des tubes 2, on prévoit que le diamètre D des disques est quelque peu inférieur au diamètre interne D1 du tube 2, notamment d'environ 0,5 mm. L'écoulement d'eau dans cet espace annulaire permet d'éliminer tout dépôt visqueux formé à la surface de ladite surface interne 3 et permet également d'éviter une perte de charge excessive de l'eau s'écoulant à travers ledit réacteur. Pour la même raison et également pour augmenter la surface de matériaux nucléogènes en contact avec l'eau en écoulement, on crée à la périphérie des disques 6 en PTFE des échancrures $6_2$, de forme semi circulaire. Compte tenu du fait que les disques en zinc 4 sont consommés au fur et à mesure, on évite de créer de telles échancrures à la périphérie de ces disques en zinc.

Le nombre de disques 4, 6, l'épaisseur e des disques 4, 6 et l'espace d entre les disques 4, 6 doivent répondre a un compromis entre la nécessité d'obtenir des surfaces nucléogènes et surfaces d'anodes sacrificielles suffisamment importantes, d'une part, et, d'autre part, que l'eau puisse s'écouler entre les disques dans des mouvements multidirectionnels et, ce, sans créer trop de perte de charge dans le réacteur.

Des disques perforés en titane $5_1$, $5_2$ sont prévus à chaque extrémité de la tige support axiale, longitudinale, 5 en titane, ce qui permet d'augmenter la surface du matériau titane et donc l'effet micro électrolytique explicité ci-après, d'une part, et, d'autre part, contribue à solidariser de manière amovible la tige 5 avec le corps tubulaire 2.

Les deux disques perforés en titane $5_1$, $5_2$ et les extrémités de la tige 5, sont vissés sur des filetage d'extrémité de ladite tige 5. et encadrent ainsi les différents disques 4 et 6.

A titre illustratif, on réalise des tubes 2 de diamètre interne $D_1$=40 mm et des disques de zinc et de PTFE de diamètre D=39,50 mm, avec une perforation centrale d'environ 4 mm pour laisser passer la tige axiale 5. Les disques en zinc 4 présentent des perforations circulaires $4_1$ de 7,6 mm de diamètre disposées régulièrement autour de la perforation centrale $4_5$, et une épaisseur e d'environ 3,75 mm. Les disques 6 en PTFE sont d'une épaisseur légèrement supérieure de 5 mm avec trois échancrures semi circulaires $6_2$ en périphérie de 7,5 mm de diamètre et six perforations circulaires $6_1$, disposées régulièrement autour de la perforation centrale $6_5$, les perforations circulaires $6_1$ présentant un diamètre de 6,5 mm. Sur la figure 1, on a disposé ainsi une vingtaine de disques à l'intérieur du tube 2, l'espacement entre les disques étant sensiblement identique à l'épaisseur des disques, soit d'environ 4 mm.

Le réacteur 1 ainsi formé peut également être configuré avec des extrémités recevant des brides pour les corps de large diamètre. De même, l'adjonction de plusieurs tiges longitudinales, à travers lesquelles les différents disques 4, 6 sont empilés, leur point de passage à travers les différents disques formant soit un triangle, soit un carré, par exemple, permet, si nécessaire, de mieux maintenir l'ensemble des disques dans le réacteur dans le cas où on fabrique un réacteur de grande dimension, notamment à partir d'un diamètre interne D1 de 100 mm. On conserve, toutefois, de préférence une tige axiale support 5.

Tous les matériaux sélectionnés pour les propriétés nucléogène et de résistance à la corrosion dans le réacteur lui-même ont été agencés pour traiter les eaux avec toutes les compositions physico-chimiques.

Le titane de qualité alimentaire et de compatibilité biomédicale est préféré à l'inconel 600, réputé également alimentaire et induisant des effets nucléogènes mais renfermant du nickel et du chrome, ce qui, dans des conditions avec des eaux très riches en chlorures et à température supérieure à 50°C, pourrait conduire à dépasser la limite autorisée de 20 μg/l de nickel et de chrome dans l'eau (règlement sanitaire sur l'eau à destination humaine). Toutefois, l'Inconel peut être mis en oeuvre dans un réacteur spécifiquement pour des applications sur des eaux industrielles et des eaux issues de stations d'épuration, ou de l'eau potable mais dont la teneur en chlorures serait inférieure à 200 mg/l (norme de potabilité).

Les disques en zinc perforés 4 qui sont placés sur la tige en titane 5 n'ont aucun contact avec la paroi interne 3 du réacteur mais sont en contact avec la tige en titane support. Et le couple de métaux (zinc/titane) formé a été mesuré avec de l'eau contenant du sel de mer par rapport à l'électrode de référence au calomel comme conduisant à - 1V de potentiel électrique (Zinc - 1V, Titane - 0.0V dans ces conditions), générant donc un effet micro électrolytique galvanique.

Ainsi, le couplage de ces deux matériaux conduira préférentiellement à la solubilisation d'anodes en zinc dont la surface développée et mouillée est largement supérieure à celle de la tige en titane, laquelle ne se corrodera pas, même dans les conditions les plus extrêmes.

Dans des eaux non corrosives, c'est-à-dire avec des teneurs faibles en chlorures et sulfates et un pH relativement élevé, par exemple pH $\geq$ 7,5, mais avec des propriétés entartrantes, c'est-à-dire avec moins de 30 mg/l de chlorure et moins de 50 mg/l de sulfate, on pourra mettre en oeuvre un réacteur selon l'invention dépourvu d'anode sacrificielle. Inversement, pour des eaux corrosives de très faible dureté, par exemple inférieure à 10°TH, comme c'est le cas pour les eaux de pluie ou des régions volcaniques, l'effet anti-corrosion sera déterminant et il est préférable de mettre en oeuvre une majorité, si ce n'est la totalité, de disques en zinc. Ce sont pour les eaux mixtes, à la fois entartrantes et corrosives, qu'on optera un partage des surfaces de matériaux nucléogènes non corrodables et matériaux faisant office d'anode sacrificielle, par une alternance des disques en PTFE 6 et des disques en zinc 4.

Enfin, l'application de films fluoropolymères nucléogènes, sur des surfaces métalliques en laiton et/ou en acier inoxydables, à l'intérieur de filtres métalliques souvent utilisés en traitement de l'eau, a également été réalisée pour les protéger contre l'entartrage et la corrosion dans des eaux entartrantes et/ou corrosives.

Les résultats obtenus ont été spectaculaires quand on laisse séjourner de l'eau très calcaire, préalablement chauffée à 100°C, dans lesdits filtres. Les effets nucléogènes, anticalcaire et anticorrosion ont été surprenants avec des eaux à 42°f de dureté, 55 mg/l de chlorure et 120 mg/l de sulfate. Aucune trace d'entartrage et aucun point de corrosion n'a été observé dans les mêmes conditions que rapportées pour les essais dans les différents béchers mentionnés ci-dessus (une eau à 100°C de température).

**Revendications**

1. Dispositif de traitement de l'eau (1), apte à être placé en amont d'une canalisation et/ou d'un appareillage comportant des surfaces métalliques ou non métalliques dont on veut éviter l'entartrage et la corrosion le cas échéant et dans lequel on fait circuler ladite eau, comprenant un corps métallique creux (2), de préférence tubulaire, dont la surface de la paroi interne est revêtue d'un film de fluoropolymère (3).

2. Dispositif selon la revendication 1, **caractérisé en ce qu'**il comporte en outre des éléments (4) métalliques formant anodes sacrificielles, placés à l'intérieur dudit corps creux (2) de préférence tubulaire, lesdits éléments formant anodes sacrificielles n'étant pas en contact avec ladite surface de la paroi interne revêtue d'un dit film de fluoropolymère (3).

3. Dispositif selon la revendication 2, **caractérisé en ce que** le ou lesdits éléments formant anodes (4) sont constitués d'un premier métal, de préférence du zinc, et lesdits éléments formant anodes sont en contact et supportés de manière amovible par une tige métallique centrale (5) d'un deuxième métal présentant un potentiel électrochimique supérieur à celui dudit premier métal, de préférence un dit deuxième métal résistant à la corrosion tel que du titane ou un alliage à base de nickel, comme l'inconel.

4. Dispositif selon l'une des revendications 1 à 3, **caractérisé en ce qu'**il comporte, à l'intérieur dudit corps creux, des éléments formant des surfaces de matériau nucléogène (6), de préférence résistant à la corrosion comme des fluoropolymères, contre lesquelles surfaces, l'eau en circulation à travers ledit corps (2) creux vient buter.

5. Dispositif selon l'une des revendications 1 à 4, **caractérisé en ce que** ledit corps creux tubulaire (2) renferme au moins une tige métallique axiale (5) supportant de manière amovible desdits éléments formant anodes (4), ainsi que desdits éléments en matériau nucléogène (6), lesdits éléments (4, 6) étant configurés de telle sorte que l'eau s'écoulant à travers ledit corps tubulaire (2) vient buter contre des surfaces desdits éléments (4, 6) s'étendant dans une direction non parallèle à la direction longitudinale axiale dudit corps creux et de la tige.

6. Dispositif selon la revendication 5, **caractérisé en ce que** :

   - lesdits éléments formant anodes et/ou lesdits éléments formant des surfaces de matériau nucléogène, sont constitués par des disques perforés, insérés à l'intérieur d'un dit corps creux de forme tubulaire,
   - lesdits disques étant supportés de manière amovible par au moins une tige longitudinale (5), sur la ou sur lesquelles ils sont enfilés de manière espacée,
   - lesdites perforations ($4_1$, $6_1$, $6_2$) de préférence circulaires d'un disque étant décalées en rotation par rapport à celle d'un disque suivant au moins pour certains des disques, de sorte que l'eau ne puisse pas s'écouler à travers ledit corps creux, dans une direction longitudinale (XX'), sans venir buter contre certaines au moins des surfaces pleines ($4_2$, $6_3$) desdits disques (4,

6) perpendiculaires à ladite direction longitudinale (XX'), et
- lesdits disques (4, 6) présentent un diamètre inférieur au diamètre interne dudit corps creux tubulaire, de manière à permettre un écoulement d'eau entre la périphérie desdits disques et ladite surface interne (3) dudit corps creux tubulaire.

7. Dispositif selon la revendication 6, **caractérisé en ce que** lesdits éléments formant anodes (4) et lesdits éléments de matériau nucléogène (6) sont disposés en alternance sur ladite tige métallique axiale (5).

8. Dispositif selon l'une des revendications 5 à 7, **caractérisé en ce qu'**il comprend desdits disques en matériau nucléogène (6), de préférence résistant à la corrosion, de préférence encore en fluoropolymère, présentant des perforations semi circulaires (6-2) formant des échancrures en périphérie des disques.

9. Dispositif selon l'une des revendications 1 à 8, **caractérisé en ce que** ledit film de fluoropolymères présente une épaisseur de 5 à 500 $\mu$m, de préférence 10 à 100 $\mu$m.

10. Dispositif selon l'une des revendications 1 à 9, **caractérisé en ce que** ledit fluoropolymère est du PTFE ou du FEP ou un mélange des deux.

11. Procédé de protection contre l'entartrage et la corrosion de canalisations et/ou appareillages présentant des surfaces métalliques ou non métalliques en contact avec de l'eau, **caractérisé en ce que** l'on dispose un dispositif selon l'une des revendications 1 à 10, en amont d'une dite canalisation et/ou dit appareillage.

12. Appareillage de production ou stockage d'eau chaude ou génération de chaleur, tel qu'un ballon d'eau chaude ou un échangeur à plaques, **caractérisé en ce qu'**il comprend en amont un dispositif selon l'une des revendications 1 à 10.

13. Appareillage selon la revendication 12, **caractérisé en ce qu'**il comprend des surfaces métalliques destinées à être en contact avec de l'eau circulant ou stockée dans ledit appareil, lesdites surfaces métalliques étant protégées par un revêtement d'un dit film de fluoropolymères d'une épaisseur de 10 à 100 $\mu$m, de préférence 10 à 60 $\mu$m.

14. Appareillage selon la revendication 13, **caractérisé en ce qu'**il s'agit d'un échangeur de chaleur à plaques dont les plaques métalliques sont revêtues d'un dit film de fluoropolymère.

FIG.1

EP 1 818 378 A1

FIG.2

4

41

45

43

42

41

**FIG.3**

6

62

64

61

65

63

62

**FIG.4**

**Office européen**

**des brevets**

## RAPPORT DE RECHERCHE EUROPEENNE

Numéro de la demande

EP 07 10 0844

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 03/033122 A (UNITED STATES FILTER CORP [US]; LI-SHIANG LIANG [US]; MONTMINY EMILE [] ) 24 avril 2003 (2003-04-24) * page 6, ligne 27 - page 7, ligne 24; figure 2 * | 1-14 | INV. C09D127/20 B05D5/08 C23F11/173 C23F14/00 |
| X | US 5 130 032 A (SARTORI HELFRED E [US]) 14 juillet 1992 (1992-07-14) * colonne 1, ligne 10-14 * * colonne 3, ligne 29 - colonne 4, ligne 7 * | 1-14 | |
| X | GB 2 160 855 A (LANGDALE OLIVER CHARLES) 2 janvier 1986 (1986-01-02) * page 1, ligne 5,6 * * page 3, ligne 70-75 * | 1-14 | |
| X | US 5 128 043 A (WILDERMUTH GLEN W [US]) 7 juillet 1992 (1992-07-07) * colonne 14, ligne 25-28; revendication 17; figure 7 * | 1-14 | |
| A | US 3 976 617 A (VASTA ET AL) 24 août 1976 (1976-08-24) * le document en entier * | 1-14 | DOMAINES TECHNIQUES RECHERCHES (IPC) C09D C09J B05D C23F C02F |
| A | US 3 859 123 A (VASTA ET AL) 7 janvier 1975 (1975-01-07) * colonne 3, ligne 30-36; revendications * | 1-14 | |
| A | US 3 655 610 A (JOSEPH A. VASTA) 11 avril 1972 (1972-04-11) * le document en entier * | 1-14 | |
| A | US 2003/049485 A1 (BRUPBACHER JOHN M ET AL) 13 mars 2003 (2003-03-13) * alinéa [0062]; revendications * | 1-14 | |

-/--

Le présent rapport a été établi pour toutes les revendications

| Lieu de la recherche | Date d'achèvement de la recherche | Examinateur |
|---|---|---|
| Munich | 20 avril 2007 | Baekelmans, Didier |

Office européen
des brevets

RAPPORT DE RECHERCHE EUROPEENNE

Numéro de la demande

EP 07 10 0844

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 739 953 A (SERMATCH INTERNATIONAL INC; SERMATECH INTERNATIONAL INC) 30 octobre 1996 (1996-10-30) * colonne 3, ligne 13-23; revendications * | 1-14 | |
| A | US 4 568 573 A (SUNADA ET AL) 4 février 1986 (1986-02-04) * colonne 1, ligne 28; revendications; exemples * | 1-14 | |
| A | US 4 116 016 A (ROOP ET AL) 26 septembre 1978 (1978-09-26) * revendications; figures 1,2 * | 1-14 | |
| A | EP 1 281 730 A (SOLVAY SOLEXIS S.P.A) 5 février 2003 (2003-02-05) * alinéas [0001] - [0003], [0010]; revendications * | 1-14 | |
| A | WO 97/01599 A (E.I. DU PONT DE NEMOURS AND COMPANY) 16 janvier 1997 (1997-01-16) * page 42, ligne 35 - page 43, ligne 16; revendications 25-42 * | 1-14 | DOMAINES TECHNIQUES RECHERCHES (IPC) |
| A | EP 0 389 966 A (SUMITOMO ELECTRIC INDUSTRIES, LIMITED; SUMITOMO ELECTRIC INDUSTRIES, L) 3 octobre 1990 (1990-10-03) * page 6, ligne 25-29; revendications * | 1-14 | |

Le présent rapport a été établi pour toutes les revendications

| Lieu de la recherche | Date d'achèvement de la recherche | Examinateur |
|---|---|---|
| Munich | 20 avril 2007 | Baekelmans, Didier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

15

## ANNEXE AU RAPPORT DE RECHERCHE EUROPEENNE
## RELATIF A LA DEMANDE DE BREVET EUROPEEN NO.

EP 07 10 0844

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2007

| Document brevet cité au rapport de recherche | | Date de publication | Membre(s) de la famille de brevet(s) | | Date de publication |
|---|---|---|---|---|---|
| WO 03033122 | A | 24-04-2003 | CA | 2461558 A1 | 24-04-2003 |
| | | | CN | 1568220 A | 19-01-2005 |
| | | | EP | 1436069 A2 | 14-07-2004 |
| US 5130032 | A | 14-07-1992 | CA | 2056244 A1 | 27-05-1993 |
| | | | EP | 0577871 A1 | 12-01-1994 |
| GB 2160855 | A | 02-01-1986 | AUCUN | | |
| US 5128043 | A | 07-07-1992 | AUCUN | | |
| US 3976617 | A | 24-08-1976 | AUCUN | | |
| US 3859123 | A | 07-01-1975 | AUCUN | | |
| US 3655610 | A | 11-04-1972 | AUCUN | | |
| US 2003049485 | A1 | 13-03-2003 | AUCUN | | |
| EP 0739953 | A | 30-10-1996 | CA | 2174923 A1 | 26-10-1996 |
| | | | DE | 69624971 D1 | 09-01-2003 |
| | | | DE | 69624971 T2 | 17-07-2003 |
| | | | JP | 9099273 A | 15-04-1997 |
| US 4568573 | A | 04-02-1986 | AUCUN | | |
| US 4116016 | A | 26-09-1978 | AUCUN | | |
| EP 1281730 | A | 05-02-2003 | IT | MI20011682 A1 | 03-02-2003 |
| | | | JP | 2003053890 A | 26-02-2003 |
| | | | US | 2003031875 A1 | 13-02-2003 |
| WO 9701599 | A | 16-01-1997 | AU | 6482396 A | 30-01-1997 |
| | | | EP | 0837901 A1 | 29-04-1998 |
| | | | JP | 2000500161 T | 11-01-2000 |
| EP 0389966 | A | 03-10-1990 | CN | 1046121 A | 17-10-1990 |
| | | | DE | 69011369 D1 | 15-09-1994 |
| | | | DE | 69011369 T2 | 15-12-1994 |
| | | | US | 5106682 A | 21-04-1992 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0680457 A
- WO 0061500 A
- WO 2004108607 A

**Littérature non-brevet citée dans la description**

- **ROQUES.** *La Tribune de l'eau,* Janvier 1994, vol. 47 (567